# EUROPÄISCHE PATENTSCHRIFT

(11) **EP 3 086 900 B1**
(45) Veröffentlichungstag und Bekanntmachung des Hinweises auf die Patenterteilung: **20.03.2019**
(21) Anmeldenummer: 14816126.8
(22) Anmeldetag: 28.11.2014
(51) Int. Cl.: B23P 19/04, B62D 65/08, B60J 10/00

(54) **VERFAHREN ZUR BILDUNG VON DICHTUNGEN AN FAHRZEUGKAROSSERIEN**
METHOD FOR FORMING SEALS ON VEHICLE BODIES
PROCÉDÉ DE FORMATION DE GARNITURES D'ÉTANCHÉITÉ SUR DES CARROSSERIES DE VÉHICULE AUTOMOBILE

(30) Priorität: 23.12.2013 DE 102013114775
(43) Veröffentlichungstag der Anmeldung: 02.11.2016
(73) Patentinhaber: CQLT SaarGummi Technologies S.à.r.l., 5544 Remich (LU)
(72) Erfinder: KAST, Christian, 66683 Merzig-Brotdorf (DE); MORAWSKI, Klaus, 66128 Saarbrücken (DE)
(74) Vertreter: Patentanwälte Bernhardt / Wolff Partnerschaft mbB
(86) Internationale Anmeldenummer: PCT/EP2014/003190
(87) Internationale Veröffentlichungsnummer: WO 2015/096880

(56) Entgegenhaltungen:
- EP-B1- 1 733 839
- WO-A1-2012/004394
- DE-A1-102007 018 792
- US-A1- 2005 123 718

## Beschreibung

Die Erfindung betrifft ein Verfahren zur Bildung von Dichtungen an Fahrzeugkarosserien, insbesondere Fahrzeugtüren oder -türeinfassungen, bei dem ein zu einer Vielzahl von Dichtungen zu verarbeitender Dichtungsmaterialstrang unter Extrusion hergestellt, der Dichtungsmaterialstrang zur Bildung einer transportablen Einheit gewickelt oder zusammengelegt, die transportable Einheit an einen Verarbeitungsort transportiert und der Dichtungsmaterialstrang am Verarbeitungsort unter Herausziehen aus der transportablen Einheit laufend einer die Dichtungen bildenden Verarbeitungseinrichtung zugeführt wird, wobei im Rahmen der Verarbeitung jeweils ein auf den betreffenden Dichtungsträgersitz aufzubringender, die Dichtung bildender Abschnitt des Dichtungsmaterialstrangs von dem Dichtungsmaterialstrang abgetrennt wird.

Verfahren solcher Art sind beispielsweise aus der EP 1 733 839 B1 und der EP 2 419 239 A1 bekannt. Bei diesen bekannten Verfahren werden Dichtungen beim Fahrzeughersteller am Fahrzeug nicht wie bis dahin durch Aufbringen in bestimmter Länge beim Dichtungsmaterialhersteller vorgefertigter Dichtungsmaterialstücke gebildet, sondern aus einem endlos zugeführten Dichtungsmaterialstrang, von dem im Rahmen der Verarbeitung jeweils eine Dichtung bildende Strangabschnitte abgetrennt werden.

Der Erfindung liegt die Aufgabe zugrunde, die Anwendungsmöglichkeiten eines solchen Verfahrens zu erweitern.

Erfindungsgemäß werden im Rahmen der Herstellung des Dichtungsmaterialstrangs die jeweils eine Dichtung bildenden Dichtungsmaterialstrangabschnitte mit sich in Stranglängsrichtung änderndem Querschnitt hergestellt und im Rahmen der Verarbeitung des Dichtungsmaterialstrangs zur Abtrennung der jeweils eine Dichtung bildenden Dichtungsmaterialstrangabschnitte erforderliche Trennstellen unter Detektierung von Markierungen, die vor der Bildung der transportablen Einheit am Dichtungsmaterialstrang erzeugt werden und in Bezug auf die Dichtungsmaterialstrangabschnitte in einer bestimmten Längsposition angeordnet sind, oder/und unter Detektierung an bestimmten Längspositionen der Dichtungsmaterialstrangabschnitte auftretender Änderungen des Querschnitts des Dichtungsmaterialstrangs ermittelt.

Nach dem Stand der Technik verarbeitete Dichtungsmaterialstränge weisen einen in Stranglängsrichtung konstanten Strangquerschnitt auf. Durch die Erfindung wird die Herstellung von Dichtungen an Fahrzeugkarosserien aus endlos zugeführten Dichtungsmaterialsträngen gegenüber dem Stand der Technik auf solche Anwendungsfälle ausgedehnt, in welchen zur Herstellung einer Dichtung jeweils ein Dichtungsmaterialstrangabschnitt mit sich in Stranglängsrichtung änderndem Querschnitt erforderlich ist, beispielsweise ein Dichtungsmaterialstrangabschnitt, der in bestimmten, z.B. zur Verlegung um Biegungen vorgesehenen Längsbereichen verstärkt ist. Erfindungsgemäß werden Anfang und Ende der einzelnen, jeweils in Stranglängsrichtung ein bestimmtes Änderungsprofil des Querschnitts aufweisenden Dichtungsmaterialstrangabschnitte anhand einer Detektierung von Markierungen ermittelt, die in Bezug auf einen solchen Dichtungsmaterialstrangabschnitt in einer bestimmten Längsposition angeordnet sind. Alternativ oder zusätzlich kann zur Ermittlung der Lage von Anfang und Ende der einzelnen Dichtungsmaterialstrangabschnitte eine bestimmte, in einer bestimmten Längsposition der jeweiligen Dichtungsmaterialstrangabschnitte auftretende charakteristische Querschnittsänderung detektiert werden, z.B. auf optischem Wege eine Änderung der äußeren Querschnittskontur. Als Querschnittsänderungen kommen bei gleichbleibender Gesamtquerschnittsfläche auch Änderungen der Lage von Materialgrenzen, z.B. zwischen härterem und weicherem Gummimaterial, in Betracht.

Vorzugsweise werden im Zuge der Verarbeitung des Dichtungsmaterialstrangs die Trennstellen ferner anhand von Messungen des Vorschubs des Dichtungsmaterialstrangs ermittelt. Zum Beispiel nach Detektierung einer charakteristischen Querschnittsänderung, deren Lage in Bezug auf das Ende des Dichtungsmaterialstrangabschnitts bekannt ist, erfolgt die Ermittlung der Trennstelle am Ende des Dichtungsmaterialstrangabschnitts durch Vergleich der bekannten Entfernung mit der laufend ermittelten Vorschublänge des Dichtungsmaterialstrangs.

Vorzugsweise werden die Markierungen an dem Dichtungsmaterialstrang bei dessen Herstellung im Zuge der Extrusion erzeugt, insbesondere durch eine im Extrusionswerkzeug oder in Extrusionsrichtung hinter dem Extrusionswerkzeug installierte Einrichtung.

Zweckmäßig wird der Dichtungsmaterialstrang mit unmittelbar aufeinanderfolgenden, jeweils zur Bildung einer Dichtung dienenden Dichtungsmaterialstrangabschnitten oder mit jeweils einem Zwischenabschnitt zwischen den Dichtungsmaterialstrangabschnitten gebildet. Die erstere erfordert gegenüber der zweiten Alternative eine höhere Präzision bei der Ermittlung der Trennstellen.

Wie weiter unten erläutert wird, sind die Zwischenabschnitte im Zuge der Verarbeitung des Dichtungsmaterialstrangs als zur Bildung einer Dichtung ungeeignete Materialstücke abzutrennen und als Abfall auszusondern.

Vorzugsweise werden beim Dichtungsmaterialhersteller vor der Bildung der transportablen Einheit aus dem Dichtungsmaterialstrang fehlerhafte Dichtungsmaterialstücke herausgetrennt, wobei als Fehler des in der transportablen Einheit enthaltenen Dichtungsmaterialstrangs vorzugsweise nur noch Verbindungsstoßstellen verbleiben.

Vorzugsweise erfolgt das Heraustrennen von Dichtungsmaterialstücken in solchem Ausmaß, dass Fehler des Dichtungsmaterialstrangs, insbesondere Verbindungsstoßstellen, nur in Zwischenabschnitten zur Anordnung kommen. Die Zwischenabschnitte können sehr kurz sein und lediglich eine solche Länge aufweisen, dass sich im Rahmen der Fertigungstoleranzen sichern lässt, dass kein Dichtungsmaterialstrangabschnitt mit zwei Stoßstellen zur Verarbeitung gelangt.

Zweckmäßig werden als Markierungen jeweils unmittelbar an Anfang und Ende der Dichtungsmaterialstrangabschnitte heranreichende Markierungen gebildet. Die Trennstellen lassen sich auf diese Weise mit geringem Aufwand durch Ermittlung der Markierungsenden bestimmen.

Zweckmäßig werden die Markierungen an den Zwischenabschnitten erzeugt und erstrecken sich vorzugsweise über die gesamte Länge der Zwischenabschnitte. Damit ist gesichert, dass die Enden der Markierung jeweils den Anfang eines vorangehenden Dichtungsmaterialstrangabschnitts und den Anfang eines nachlaufenden Dichtungsmaterialstrangabschnitts kennzeichnen.

Das Verfahren nach der Erfindung lässt sich vorzugsweise auch derart ausführen, dass unabhängig von einem Zwischenabschnitt vorhandene Fehler des Dichtungsmaterialstrangs durch gesonderte, sich von den Markierungen abhebende, Fehlermarkierungen gekennzeichnet werden. Diese Fehlermarkierungen zeigen dann an, dass das betreffende Dichtungsmaterialstrangstück zur Bildung einer Dichtung nicht geeignet ist und am Anfang des nächstfolgenden, zur Bildung einer Dichtung geeigneten Dichtungsmaterialstrangabschnitts abzutrennen und auszusondern ist.

Die Herstellung von Dichtungsmaterialsträngen mit Dichtungsmaterialstrangabschnitten, deren Querschnitt sich in Stranglängsrichtung ändert, erfolgt vorzugsweise durch Variation des Extrusionsquerschnitts. Alternativ kann in einen Dichtungshohlraum sich verfestigendes Elastomermaterial von außen injiziert werden. Denkbar ist auch die Einbringung von festen Materialstücken in Extrusionsrichtung durch das Extrusionswerkzeug hindurch in den Dichtungshohlraum. Schließlich lassen sich Querschnittsänderungen auch durch Schneidbearbeitung extrudierter Stränge z.B. mittels Laser, Wasserstrahl oder Stanzwerkzeugen erzeugen.

Die Erfindung wird nachfolgend anhand von Ausführungsbeispielen und der beiliegenden, sich auf diese Ausführungsbeispiele beziehenden Zeichnungen näher erläutert. Es zeigen:
- Fig. 1: eine nach dem erfindungsgemäßen Verfahren arbeitende Anlage zur Erzeugung von Dichtungen an Fahrzeugtüren aus einem endlos zugeführten Dichtungsmaterialstrang,
- Fig. 2 und 3: die Verarbeitung eines Dichtungsmaterialstrangs durch die Anlage von Fig. 1 erläuternde Darstellungen, und
- Fig. 4 bis 7: weitere Ausführungsbeispiele für Dichtungsmaterialstränge zur Verarbeitung nach dem erfindungsgemäßen Verfahren.

Ein Materialstrang 1 zur Bildung an Fahrzeugtüren 3 umlaufender Dichtungen 2 wird von einer Transport- und Vorratsrolle 4 abgewickelt und über einen Puffer 5 laufend einer die Türdichtungen erzeugenden Verarbeitungseinrichtung 6 zugeführt. Die Fahrzeugtüren 3 werden zur Bestückung taktweise an- und abtransportiert.

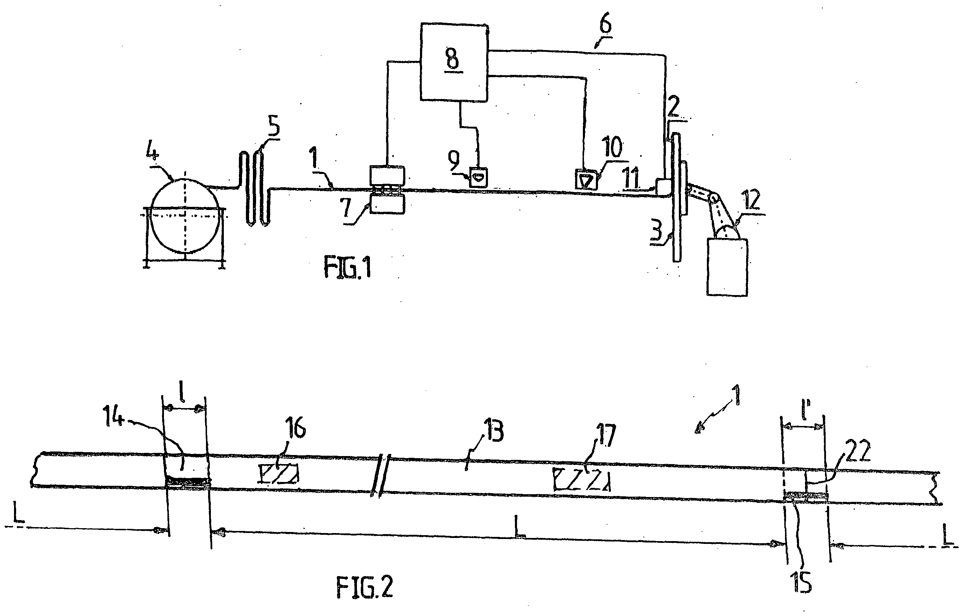

Die Verarbeitungseinrichtung 6 umfasst eine Transport- und Führungseinrichtung 7. Die in Fig. 1 vereinfacht als Block dargestellte Transport- und Führungseinrichtung 7 weist neben einer Antriebsraupe über die Verarbeitungslänge des Materialstrangs 1 verteilte, im Einzelnen nicht gezeigte Antriebs- und Führungsrollen auf. Die Antriebs- und Führungseinrichtung 7 steht mit einer Steuereinrichtung 8 der Verarbeitungseinrichtung 6 in Verbindung. Die Steuereinrichtung 8 kann u.a. die Vorschubgeschwindigkeit des Materialstrangs 1 verändern und den Vorschub ggf. stoppen.

Die Verarbeitungseinrichtung 6 weist in dem gezeigten Beispiel ferner eine Einrichtung 9 auf, welche am Materialstrang 1 beim Stranghersteller angebrachte Markierungen optisch erfasst. Einen weiteren Bestandteil der Verarbeitungseinrichtung 6 bildet eine Trenneinrichtung 10 zum Abtrennen eines jeweils für die Bildung einer Dichtung 2 benötigten Abschnitts des Materialstrangs 1. Die Trenneinrichtung 10 empfängt Steuersignale der Steuereinrichtung 8. Die Steuereinrichtung 8 steuert ferner eine Applikationseinrichtung 11, welche jeweils den eine Dichtung 2 bildenden Abschnitt des Materialstrangs 1 auf die betreffende Fahrzeugtür 3 aufbringt und mit dieser verbindet, z.B. verklebt. In dem beschriebenen Beispiel hält und bewegt ein Roboter 12 die Fahrzeugtür 3 relativ zu der Applikationseinrichtung 11 derart, dass durch den fortlaufend aufgebrachten Materialstrangabschnitt ein an der Fahrzeugtür 3 umlaufender Dichtring gebildet wird, während die Applikationseinrichtung 11 an Ort und Stelle verbleibt.

Es versteht sich, dass die Applikationseinrichtung selbst eine Bewegungseinrichtung aufweisen könnte, durch die der Strang umlaufend mit einem Türrand oder dem Öffnungsrand einer Tür oder einer Fahrzeugklappe verbunden werden kann.

Ein erstes Ausführungsbeispiel für einen auf die Vorrats- und Transportrolle 4 aufzuwickelnden Materialstrang 1 zeigt Fig. 2.

Der extrudierte Materialstrang 1 weist periodisch wiederkehrende, jeweils der Bildung einer Dichtung dienende Strangabschnitte 13 der Länge L auf. Zwischen den Strangabschnitten 13 ist jeweils ein Zwischenabschnitt 14 gebildet, der im Normalfall eine bestimmte Länge I aufweist, die sehr klein im Vergleich mit der Länge L ist. In dem gezeigten Beispiel erstreckt sich über die gesamte Länge der Zwischenabschnitte 14 eine Markierung 15.

Der periodisch wiederkehrende Strangabschnitt 13 weist ein bestimmtes Längsprofil seines Querschnitts auf. In dem gezeigten Beispiel sind an bestimmten Längspositionen des Strangabschnitts 13 einen Hohlraum des Materialstrangs 1 füllende Verstärkungen 16 und 17 gebildet. Beim Verbauen des Strangabschnitts 13 kommen diese Verstärkungen 16,17 an bestimmten Stellen des Dichtungsträgers zur Anordnung, z.B. in Biegungsbereichen.

Die Verstärkungen 16,17 können auf verschiedene Weise hergestellt sein, z.B. durch Variation des Extrusionsquerschnitts durch Einbringen von Materialstücken in das Extrusionswerkzeug oder durch Injektion von fließfähigem, sich innerhalb des Hohlraums des Materialstrangs verfestigendem Elastomermaterial.

Die Markierungen 15 werden zweckmäßig im Zuge der Extrusion des Materialstrangs aufgebracht. Der auf die Vorrats- und Transportrolle 4 aufgewickelte Materialstrang 1 wurde beim Hersteller des Materialstrangs 1 auf Fehler untersucht und fehlerhafte Abschnitte herausgetrennt. Die Aussonderung fehlerhafter Abschnitte erfolgte derart, dass sich ergebende Verbindungsstoßstellen innerhalb der Zwischenabschnitte 14 zur Anordnung kommen. Enthält ein Zwischenabschnitt 14 eine solche Verbindungsstoßstelle 22, so kann die Länge I' dieses Zwischenabschnitts von der Länge I abweichen. Alternativ könnte mit größerem Aufwand die Aussonderung fehlerhafter Abschnitte auch so erfolgen, dass sich Zwischenabschnitte genau der Länge I ergeben. Insbesondere in letzterem Fall braucht sich die Markierung 15 nicht über die gesamte Länge des Zwischenabschnitts 14 zu erstrecken, wie weiter unten dargelegt ist.

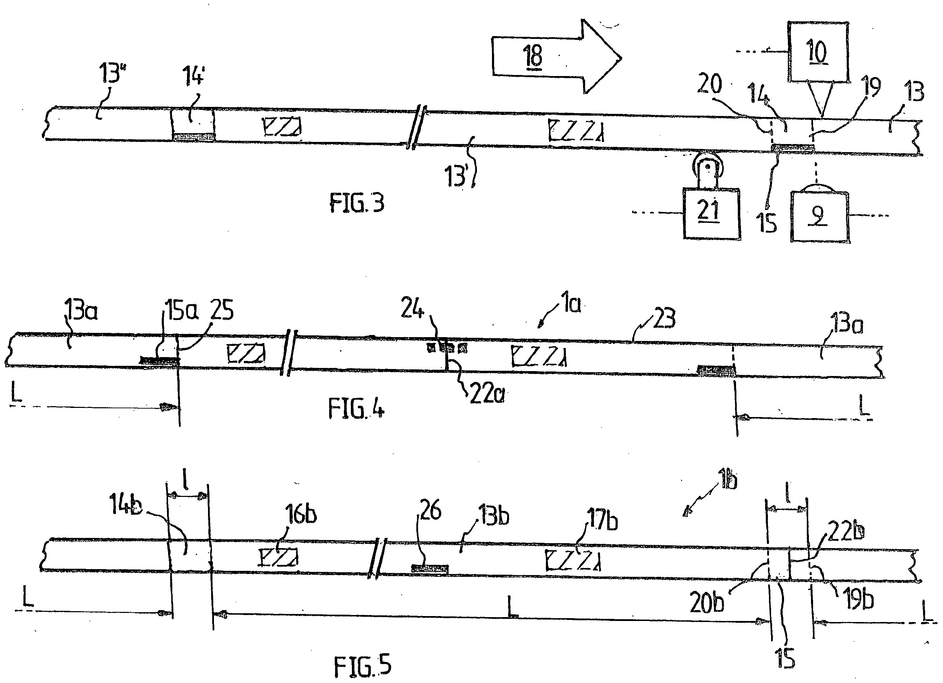

Bei der Verarbeitung des Materialstrangs 1 durch die Verarbeitungseinrichtung 6 wird der Materialstrang 1 durch die Antriebs- und Führungseinrichtung 7 gemäß Pfeil 18 (Fig. 3) vorgeschoben. Eine in die Antriebs- und Führungseinrichtung 3 integrierte Vorschubmesseinrichtung 21 registriert die Vorschublänge. Wenn die optische Einrichtung 9 ein in Vorschubrichtung vorderes Ende einer Markierung 15 erfasst, so aktiviert die Steuereinrichtung 8 nach Durchlaufen der betreffenden Vorschublänge, um die sich die Positionen der Einrichtung 9 und der Trenneinrichtung 10 voneinander unterscheiden, die Trenneinrichtung 10. Die Trenneinrichtung 10 trennt dann das Ende des voranlaufenden Strangabschnitts bei 19 ab, dessen vorderes Ende bereits durch die Applikationseinrichtung 11 auf den Dichtungsträger aufgebracht worden ist. Im nächsten Verarbeitungsschritt erfasst die optische Einrichtung 9 das in Vorschubrichtung hintere Ende der betreffenden Markierung 15 und löst über die Steuereinrichtung 8 erneut die Aktivierung der Trenneinrichtung 10 aus, die den betreffenden Zwischenabschnitt bei 20 abtrennt.

Bei der vorangehend beschriebenen Verfahrensweise orientiert sich die optische Einrichtung 9 an den Markierungsenden. Bei konstanter Länge der Zwischenabschnitte 14 genügt eine kürzere Markierung. Die Trennstelle 20 wird dann über eine Vorschublängenmessung ermittelt.

Der folgende Dichtungsstrang 13' kann nun als nächster verarbeitet und sein hinteres Ende, wie auch der nächstfolgende Zwischenabschnitt 14' in der vorangehend beschriebenen Weise abgetrennt werden.

Auf die Transport- und Vorratsrolle 4 könnte auch ein Materialstrang 1a aufgewickelt sein, wie er in Fig. 4 gezeigt ist.

Ein Materialstrang 1a weist unmittelbar aufeinanderfolgende Strangabschnitte 13a mit einem sich wiederholenden Längsprofil ihres Querschnitts auf. Jeder der Strangabschnitte 13a dient zur Bildung einer Dichtung. Am Anfang 25 jedes Strangabschnitts 13a der Länge L befindet sich eine Markierung 15a. Wie Fig. 4 zeigt, kann die regelmäßige Aufeinanderfolge von Strangabschnitten 13a dadurch unterbrochen sein, dass sich zwischen zwei Strangabschnitten 13a ein Abschnitt 23 mit einer Verbindungsstoßstelle 22a befindet. Die Stoßstelle 22a wurde nach dem Heraustrennen eines fehlerhaften Materialstrangstücks beim Materialstranghersteller gebildet und durch eine Markierung 24 gekennzeichnet. Die in Stranglängsrichtung unterbrochene Markierung 24 erkennt die Verarbeitungseinrichtung 6 als Fehlermarkierung.

Bei der Verarbeitung des Strangs 1a erkennt die Steuereinrichtung 8 anhand der Fehlermarkierung 24, dass der betreffende Strangabschnitt 23 zur Herstellung einer Dichtung nicht verwendbar ist und sorgt dafür, dass der betreffende Abschnitt beim weiteren Vorschub nicht von der Applikationseinrichtung 11 zur Verarbeitung erfasst sondern ausgesondert wird. Der Materialstrang 1 läuft weiter, bis die optische Einrichtung 9 die nächstfolgende Markierung 15a erfasst und über die Steuereinrichtung 8 die Abtrennung des fehlerhaften Abschnitts 23 bewirkt. Im Normalfall erfolgt jeweils am Beginn der Markierungen 15a die Abtrennung des jeweils verarbeiteten Strangabschnitts. Natürlich könnte die Markierung auch so angebracht sein, dass dies am Ende der Markierung oder in einer vorbestimmten Längsposition der Markierung erfolgt.

Ein in Fig. 5 dargestellter Materialstrang 1b mit Strangabschnitten 13b konstanter Länge L zur Bildung je einer Dichtung und Zwischenabschnitten 14b konstanter Länge I weist je Strangabschnitt 13b nur ein einzige Markierung 26 auf. Die Markierung 26 befindet sich an einer vorbestimmten Längsposition des Strangabschnitts 13b. Bei der Verarbeitung des Materialstrangs 1b erfasst die optische Einrichtung 9 diese Markierung. Ausgehend von deren bekannter Längsposition und der bekannten Länge I der Zwischenabschnitte 14b werden die jeweiligen Trennstellen 19b und 20b anhand einer Vorschublängenmessung mit Hilfe der Vorschubmesseinrichtung 21 bestimmt.

Anstelle der Markierung 26 könnte die optische Einrichtung z.B. auch eine markante, in einer bestimmten Längsposition auftretende äußere Querschnittsform des Querschnittslängsprofils des Strangabschnitts 13b ermitteln.

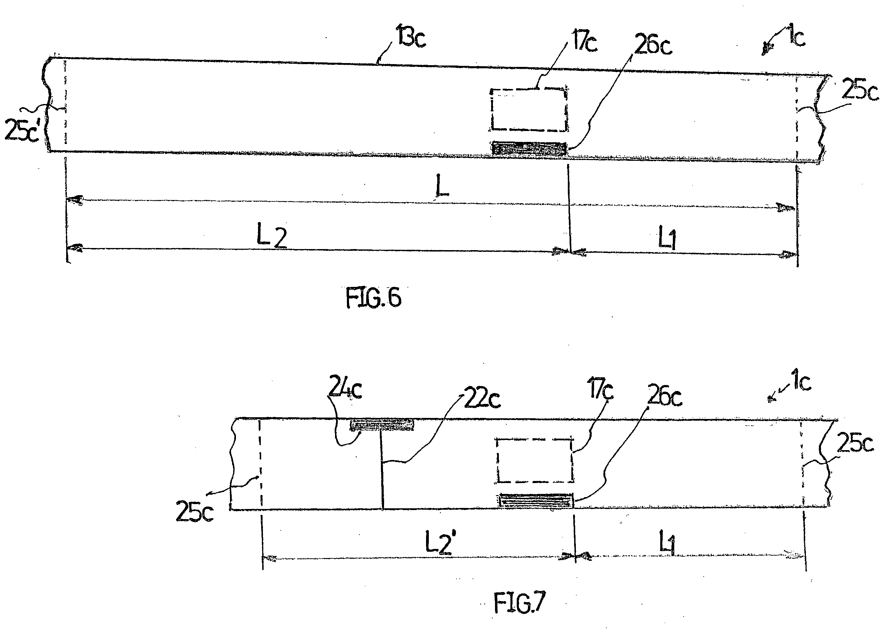

Fig. 6 und 7 zeigen ein besonders bevorzugtes Ausführungsbeispiel eines Materialstrangs 1c, der periodisch wiederkehrende, jeweils der Bildung einer Dichtung dienende Materialstrangabschnitte 13c der Länge L mit einer Verstärkung 17c in einer bestimmten Längsposition des Materialstrangabschnitts 13c aufweist. Bei der Verstärkung 17c befindet sich eine Markierung 26c. Das in Vorschubrichtung vordere Ende der Markierung 26c weist zum vorderen Ende 25c des Materialstrangabschnitts 13c den Abstand L1, zum hinteren Ende 25c' des Materialstrangabschnitts 13c den Abstand L2 auf.

Erfasst die obengenannte Einrichtung 9 z.B. das in Vorschubrichtung vordere Ende der Markierung 26c, so sind die jeweiligen Vorschubkoordinaten des Anfangs 25c und des Endes 25c' des Materialstrangabschnitts 13c zu diesem Erfassungszeitpunkt bekannt. Weitere Änderungen der Vorschubkoordinaten lassen sich mit Hilfe der obengenannten Vorschubmesseinrichtung 21 bestimmen. Insbesondere lassen sich die Zeitpunkte ermitteln, zu denen Anfang und Ende des Materialstrangsabschnitts 13c die Position der obengenannten Trenneinrichtung 10 erreichen.

Gemäß Fig. 7 ist die Periodizität des Materialstrangs 1c infolge einer Stoßverbindung 22c gestört. Die Stoßverbindung wurde beim Hersteller des Materialstrangs 1c im Rahmen einer Prüfung und Aussonderung eines fehlerhaften Strangbereichs gebildet. Eine gesonderte Fehlermarkierung 24c, die am Strang in einer in diesem Beispiel am Strangumfang in einer anderen Position als die Markierung 26c angeordnet ist, weist auf die Stoßverbindung 22c hin.

Registriert die obengenannte Einrichtung 9 oder eine gesonderte Einrichtung zur Erkennung einer solchen Fehlermarkierung 24c innerhalb einer Vorschublänge L1 oder L2 vor bzw. hinter einer Markierung 26c eine Fehlermarkierung 24c, so kommt der betreffende Materialstrangbereich bis zum vorderen Ende des nächstfolgenden intakten Materialstrangabschnitts 13c nicht zur Verarbeitung und wird ausgesondert, bevor er durch die Applikationseinrichtung 11 erfasst wird.

In einer weiteren Ausführungsform eines endlos zu verarbeitenden Dichtungsmaterialstrangs mit je einen Dichtungsmaterialstrangabschnitt für die Bildung einer Dichtung kennzeichnenden Markierungen 26c können Fehlermarkierungen, wie die Markierung 24c, auch gänzlich entfallen.

Fehlerhafte, zur Bildung einer Dichtung ungeeignete Strangteile des Dichtungsmaterialstrangs, die z.B. eine nach Aussonderung fehlerhafter Strangteile durch den Hersteller verbleibende Stoßverbindung enthalten, lassen sich nämlich allein daran erkennen, dass die Periodizität der Markierungen gestört ist. Ein von der Länge L abweichender Abstand zwischen zwei Markierungen zeigt eindeutig einen solchen Fehler an, sofern beim Aussondern fehlerhafter Strangteile durch den Hersteller vermieden wird, Strangteile genau der Länge L oder eines ganzzahligen Vielfachen davon auszusondern. Die Länge des ausgesonderten Strangteils muss hiervon so deutlich abweichen, dass die Periodizität erkennbar aufgehoben ist.

Wird im Zuge der Verarbeitung des Dichtungsmaterialstrangs 1c mit Hilfe der Einrichtung 9 und der Vorschubmesseinrichtung 21 (sowie mit Hilfe der Steuereinrichtung 8) ein Abstand zwischen zwei Markierungen ungleich L ermittelt, so wird ein Strangteil ausgesondert, dessen in Vorschubrichtung vorderes Ende im Abstand L1 von der betreffenden, in Vorschubrichtung vorderen Markierung und dessen hinteres Ende im Abstand L2 von der betreffenden in Vorschubrichtung hinteren Markierung der zwei Markierungen liegt.

Es versteht sich, dass die Merkmale der vorangehend beschriebenen Dichtungsmaterialstränge 1,1a,1b,1c miteinander kombinierbar sind. Neben einer Ermittlung der Trennstellen anhand von Störungen der Periodizität des Auftretens der je einen Dichtungsmaterialstrangabschnitt 13,13a,13b,13c kennzeichnenden Markierungen 15,15a,26,26c können zur Trennstellenermittlung zusätzlich Fehlermarkierungen 24,24c eingesetzt werden. Solche Fehlermarkierungen lassen sich auf unterschiedliche Weise von den die Dichtungsmaterialstrangabschnitte 13,13a,13b,13c kennzeichnenden Markierungen 15,15a,26,26c unterscheiden, z.B. durch die Position am Umfang des Strangs oder die Art der grafischen Darstellung.

In einer besonderen Ausführungsform können als Fehlermarkierungen Linerverbindungsbrücken dienen, die an Verbindungsstoßstellen eines Dichtungsmaterialstrangs, der eine durch einen Liner abgedeckte Klebefläche aufweist, gebildet werden müssen.

Die der Kennzeichnung der periodisch wiederkehrenden Dichtungsmaterialstrangabschnitte dienenden Markierungen können im Falle des Auftretens von Fehlern modifiziert werden und z.B. einen grafischen Hinweis enthalten, dass sich eine Verbindungsstoßstelle in Vorschubrichtung vor oder hinter der Markierung befindet. Solche Modifikationen kommen in Betracht, wenn die Markierung nicht unmittelbar im Zuge der Extrusion sondern im Zuge der Prüfung des extrudierten Materials beim Dichtungsmaterialstranghersteller durchgeführt wird.

## Patentansprüche

1. Verfahren zur Bildung von Dichtungen an Fahrzeugkarosserien, insbesondere Fahrzeugtüren (3) oder Türeinfassungen, bei dem ein zu einer Vielzahl von Dichtungen (2) zu verarbeitender Dichtungsmaterialstrang (1) unter Extrusion hergestellt, der Dichtungsmaterialstrang (1) zur Bildung einer transportablen Einheit (4) gewickelt oder zusammengelegt, die transportable Einheit (4) an einen Verarbeitungsort transportiert und der Dichtungsmaterialstrang (1) am Verarbeitungsort unter Herausziehen aus der transportablen Einheit laufend einer die Dichtungen (2) bildenden Verarbeitungseinrichtung (6) zugeführt wird, wobei im Rahmen der Verarbeitung jeweils ein auf den betreffenden Dichtungsträgersitz aufzubringender, die Dichtung (2) bildender Abschnitt des Dichtungsmaterialstrangs (1) von dem Dichtungsmaterialstrang (1) abgetrennt wird, **dadurch gekennzeichnet,**
**dass** die jeweils eine Dichtung bildenden Dichtungsmaterialstrangabschnitte (13) mit sich in Stranglängsrichtung änderndem Querschnitt hergestellt und im Rahmen der Verarbeitung des Dichtungsmaterialstrangs (1) zur Abtrennung der jeweils eine Dichtung bildenden Dichtungsmaterialstrangabschnitte (13) erforderliche Trennstellen (19,20) unter Detektierung von Markierungen (15;26;24), die vor der Bildung der transportablen Einheit am Dichtungsmaterialstrang (1) erzeugt werden und in Bezug auf die Dichtungsmaterialstrangabschnitte (13) in einer bestimmten Längsposition angeordnet sind, oder/und unter Detektierung an bestimmten Längspositionen der Dichtungsmaterialstrangabschnitte (13) auftretender Änderungen des Querschnitts des Dichtungsmaterialstrangs (1) ermittelt werden.

2. Verfahren nach Anspruch 1,
**dadurch gekennzeichnet,**
**dass** die Trennstellen (19,20;25) ferner anhand von Messungen des Vorschubs des Dichtungsmaterialstrangs (1) ermittelt werden.

3. Verfahren nach Anspruch 1 oder 2,
**dadurch gekennzeichnet,**
**dass** die Markierungen (15;26;24) an dem Dichtungsmaterialstrang (1) bei dessen Herstellung im Zuge der Extrusion erzeugt werden.

4. Verfahren nach einem der Ansprüche 1 bis 3,
**dadurch gekennzeichnet,**
**dass** der Dichtungsmaterialstrang (1) mit unmittelbar aufeinanderfolgenden, jeweils zur Bildung einer Dichtung (2) dienenden Dichtungsmaterialstrangabschnitten (13a,c) oder mit jeweils einem Zwischenabschnitt (14) zwischen den Dichtungsmaterialstrangabschnitten (13) gebildet wird.

5. Verfahren nach einem der Ansprüche 1 bis 4,
**dadurch gekennzeichnet,**
**dass** im Zuge der Verarbeitung des Dichtungsmaterialstrangs (1) zur Bildung einer Dichtung (2) ungeeignete Dichtungsmaterialstrangteile (14;23) abgetrennt und als Abfall ausgesondert werden.

6. Verfahren nach einem der Ansprüche 1 bis 5,
**dadurch gekennzeichnet,**
**dass** vor der Bildung der transportablen Einheit (4) aus dem Dichtungsmaterialstrang (1) fehlerhafte Dichtungsmaterialstücke herausgetrennt werden, wobei als Fehler des in der transportablen Einheit (4) enthaltenen Dichtungsmaterialstrangs (1) vorzugsweise nur noch Verbindungsstoßstellen (22) verbleiben.

7. Verfahren nach Anspruch 6,
**dadurch gekennzeichnet,**
**dass** das Heraustrennen von Dichtungsmaterialstücken in solchem Ausmaß erfolgt, dass Fehler des Dichtungsmaterialstrangs (1), insbesondere Verbindungsstoßstellen (22), nur in Zwischenabschnitten (14) zur Anordnung kommen.

8. Verfahren nach einem der Ansprüche 1 bis 7,
**dadurch gekennzeichnet,**
**dass** als Markierungen jeweils unmittelbar an Anfang und Ende der Dichtungsmaterialstrangabschnitte (13) heranreichende Markierungen (15) gebildet werden.

9. Verfahren nach einem der Ansprüche 1 bis 7,
**dadurch gekennzeichnet,**
**dass** die Markierungen (15) an den Zwischenabschnitten (14) erzeugt werden und sich vorzugsweise über die gesamte Länge der Zwischenabschnitte (14) erstrecken.

10. Verfahren nach einem der Ansprüche 4 bis 9,
**dadurch gekennzeichnet,**
**dass** unabhängig von einem Zwischenabschnitt (14) vorhandene Fehler des Dichtungsmaterialstrangs (1) durch gesonderte, sich von den Markierungen (15) abhebende Fehlermarkierungen (24) gekennzeichnet werden.

11. Verfahren nach einem der Ansprüche 1 bis 10,
**dadurch gekennzeichnet,**
**dass** Änderungen des Querschnitts in Stranglängsrichtung des Dichtungsmaterialstrangs (1) durch Variation des Extrusionsspalts oder/und Injektion sich in einem Dichtungshohlraum verfestigenden Elastomermaterials gebildet werden.

12. Verfahren nach einem der Ansprüche 1 bis 11,
**dadurch gekennzeichnet,**
**dass** die Markierungen (26b,c) jeweils in einer bestimmten Längsposition der Dichtungsmaterialabschnitte (13b,c) vorgesehen und vorzugsweise einer bestimmten Querschnittsänderung (17c) des Dichtungsmaterialstrangabschnitts (13c) zugeordnet sind.

13. Verfahren nach Anspruch 12,
**dadurch gekennzeichnet,**
**dass** vor der Bildung der transportablen Einheit fehlerhafte Dichtungsmaterialstrangstücke ausschließlich unter Störung der Periodizität der Markierungen (26c) ausgesondert werden.

14. Verfahren nach Anspruch 13,
**dadurch gekennzeichnet,**
**dass** im Zuge der Verarbeitung des Dichtungsmaterialstrangs (26c) fehlerhafte Strangmaterialteile ausschließlich anhand der Störung der Periodizität ermittelt und ausgesondert werden.

## Claims

1. Method for forming seals on vehicle bodies, in particular vehicle doors (3) or door frames, in which a sealing material strand (1) to be processed to form a multiplicity of seals (2) is produced by extrusion, the sealing material strand (1) is coiled or folded up to form a transportable unit (4), the transportable unit (4) is transported to a processing site and, at the processing site, the sealing material strand (1) is continuously supplied, by being pulled out of the transportable unit, to a processing device (6) which forms the seals (2), wherein, within the scope of the processing, a portion of the sealing material strand (1) that is to be applied to the sealing support seat concerned and forms the seal (2) is in each case severed from the sealing material strand (1), **characterized in that** the sealing material strand portions (13) each forming a seal are produced with a cross section which changes in the longitudinal direction of the strand and, within the scope of the processing of the sealing material strand (1), severing points (19, 20) required for severing the sealing material strand portions (13), which each form a seal, are determined by detecting markings (15; 26; 24) which are produced on the sealing material strand (1) before the formation of the transportable unit and are arranged in a certain longitudinal position with respect to the sealing material strand portions (13), and/or by detecting changes occurring at certain longitudinal positions of the sealing material strand portions (13) in the cross section of the sealing material strand (1).

2. Method according to Claim 1, **characterized in that** the severing points (19, 20; 25) are furthermore determined with reference to measurements of the feed rate of the sealing material strand (1).

3. Method according to Claim 1 or 2, **characterized in that** the markings (15; 26; 24) on the sealing material strand (1) are produced over the course of the extrusion during the production of said sealing material strand.

4. Method according to one of Claims 1 to 3, **characterized in that** the sealing material strand (1) is formed with sealing material strand portions (13a,c) which directly follow one another and each serve to form a seal (2), or with in each case an intermediate portion (14) between the sealing material strand portions (13).

5. Method according to one of Claims 1 to 4, **characterized in that**, over the course of the processing of the sealing material strand (1) to form a seal (2), unsuitable sealing material strand parts (14; 23) are severed and discarded as waste.

6. Method according to one of Claims 1 to 5, **characterized in that** defective sealing material pieces are cut out of the sealing material strand (1) before the transportable unit (4) is formed, wherein preferably only connecting joints (22) remain as errors of the sealing material strand (1) contained in the transportable unit (4).

7. Method according to Claim 6, **characterized in that** sealing material pieces are cut out to such an extent that errors of the sealing material strand (1), in particular connecting joints (22), are only arranged in intermediate portions (14).

8. Method according to one of Claims 1 to 7, **characterized in that** the markings formed are in each case markings (15) which reach directly to the beginning and end of the sealing material strand portions (13).

9. Method according to one of Claims 1 to 7, **characterized in that** the markings (15) are produced on the intermediate portions (14) and preferably extend over the entire length of the intermediate portions (14).

10. Method according to one of Claims 4 to 9, **characterized in that** errors of the sealing material strand (1) that are present independently of an intermediate portion (14) are indicated by separate error markings (24) dissimilar to the markings (15).

11. Method according to one of Claims 1 to 10, **characterized in that** changes to the cross section in the longitudinal direction of the sealing material strand (1) are formed by variation of the extrusion gap or/and injection of elastomer material which solidifies in a seal cavity.

12. Method according to one of Claims 1 to 11, **characterized in that** the markings (26b,c) are each provided at a certain longitudinal position of the sealing material portions (13b,c) and are preferably assigned to a certain cross-sectional change (17c) in the sealing material strand portion (13c).

13. Method according to Claim 12, **characterized in that**, before the transportable unit is formed, defective sealing material strand pieces are discarded exclusively by interfering with the periodicity of the markings (26c).

14. Method according to Claim 13, **characterized in that**, over the course of processing the sealing material strand (26c), defective strand material parts are determined and discarded exclusively on the basis of interfering with the periodicity.

## Revendications

1. Procédé pour la formation de joints sur des carrosseries de véhicule, en particulier sur des portes (3) de véhicule ou sur des encadrements de porte, dans lequel un brin (1) de matériau d'étanchéité à transformer en une multitude de joints (2) est fabriqué par extrusion, le brin (1) de matériau d'étanchéité est enroulé ou regroupé pour la formation d'une unité (4) transportable, l'unité (4) transportable est transportée en un site de transformation et le brin (1) de matériau d'étanchéité est introduit en continu, sur le site de transformation, par extraction depuis l'unité transportable, dans un dispositif de transformation (6) formant les joints (2), une section du brin (1) de matériau d'étanchéité, à appliquer sur le siège support du joint en question, formant le joint (2), étant à chaque fois séparée du brin (1) de matériau d'étanchéité dans le cadre de la transformation, **caractérisé en ce que** les sections (13) de brin de matériau formant à chaque fois un joint sont fabriquées avec une section transversale qui varie dans la direction longitudinale du brin et, dans le cadre de la transformation du brin (1) de matériau d'étanchéité, des sites de séparation (19, 20) nécessaires pour la séparation des sections (13) de brin de matériau d'étanchéité formant à chaque fois un joint sont déterminés par détection de marquages (15 ; 26 ; 24), qui sont générés sur le brin (1) de matériau d'étanchéité avant la formation de l'unité transportable et disposés en une position longitudinale déterminée par rapport aux sections (13) de brin de matériau d'étanchéité et/ou par détection de modifications de la section transversale du brin (1) de matériau d'étanchéité qui surviennent en des positions longitudinales déterminées des sections (13) de brin de matériau d'étanchéité.

2. Procédé selon la revendication 1, **caractérisé en ce que** les sites de séparation (19, 20; 25) sont en outre déterminés à l'aide de mesures de l'avancement du brin (1) de matériau d'étanchéité.

3. Procédé selon la revendication 1 ou 2, **caractérisé en ce que** les marquages (15 ; 26 ; 24) sont générés sur le brin (1) de matériau d'étanchéité lors de sa fabrication au cours de l'extrusion.

4. Procédé selon l'une quelconque des revendications 1 à 3, **caractérisé en ce que** le brin (1) de matériau d'étanchéité est formé avec des sections (13a,c) de brin de matériau d'étanchéité, servant à chaque fois à la formation d'un joint (2), directement consécutives ou avec à chaque fois une section intermédiaire (14) entre les sections (13) de brin de matériau d'étanchéité.

5. Procédé selon l'une quelconque des revendications 1 à 4, **caractérisé en ce qu'**au cours de la transformation du brin (1) de matériau d'étanchéité, des parties de brin (14; 23) de matériau d'étanchéité non appropriées pour la formation d'un joint (2) sont séparées et évacuées en tant que déchet.

6. Procédé selon l'une quelconque des revendications 1 à 5, **caractérisé en ce qu'**avant la formation de l'unité (4) transportable, des morceaux imparfaits de matériau d'étanchéité sont séparés du brin (1) de matériau d'étanchéité, seuls des sites de joint bout à bout (22) restant encore comme défauts du brin (1) de matériau d'étanchéité contenu dans l'unité (4) transportable.

7. Procédé selon la revendication 6, **caractérisé en ce que** la séparation de morceaux de matériau d'étanchéité a lieu dans une mesure telle que des défauts du brin (1) de matériau d'étanchéité, en particulier les sites de joint bout à bout (22), ne se trouvent que dans des sections intermédiaires (14).

8. Procédé selon l'une quelconque des revendications 1 à 7, **caractérisé en ce que** des marquages (15) confinant à chaque fois directement au début et à la fin des sections (13) de matériau d'étanchéité sont formés comme marquages.

9. Procédé selon l'une quelconque des revendications 1 à 7, **caractérisé en ce que** les marquages (15) sont générés au niveau des sections intermédiaires (14) et s'étendent de préférence sur toute la longueur des sections intermédiaires (14).

10. Procédé selon l'une quelconque des revendications 4 à 9, **caractérisé en ce que** des défauts du brin (1) de matériau d'étanchéité, présents indépendamment d'une section intermédiaire (14), sont **caractérisés par** des marquages de défaut (24) se distinguant des marquages (15).

11. Procédé selon l'une quelconque des revendications 1 à 10, **caractérisé en ce que** des modifications de la section transversale dans la direction longitudinale du brin (1) de matériau d'étanchéité sont formées par variation de la fente d'extrusion et/ou par injection de matériau élastomère se solidifiant dans un espace creux du joint.

12. Procédé selon l'une quelconque des revendications 1 à 11, **caractérisé en ce que** les marquages (26b,c) sont à chaque fois prévus dans une position longitudinale déterminée des sections (13b,c) de matériau d'étanchéité et sont de préférence associés à une modification (17c) déterminée de la section transversale de la section (13c) du brin de matériau d'étanchéité.

13. Procédé selon la revendication 12, **caractérisé en ce que** des morceaux de brin de matériau de étanchéité imparfaits sont exclusivement séparés en perturbant la périodicité des marquages (26c) avant la formation de l'unité transportable.

14. Procédé selon la revendication 13, **caractérisé en ce que** des parties imparfaites de matériau du brin sont déterminées et écartées exclusivement à l'aide de la perturbation de la périodicité au cours de la transformation du brin (26c) de matériau d'étanchéité.
